# EUROPEAN PATENT APPLICATION

(11) **EP 2 942 507 A1**
(43) Date of publication of application: **11.11.2015**
(21) Application number: 13870112.3
(22) Date of filing: 07.01.2013
(51) Int. Cl.: F02B 23/02, F02B 23/10, F02M 61/18

(54) **INTERNAL COMBUSTION ENGINE**

(71) Applicant: Toyota Jidosha Kabushiki Kaisha, Toyota-shi, Aichi 471-8571 (JP)
(72) Inventor: MICHIKAWAUCHI, Ryo, Toyota-shi Aichi 471-8571 (JP)
(74) Representative: Smith, Samuel Leonard
(86) International application number: PCT/JP2013/050039
(87) International publication number: WO 2014/106903

(57) **Abstract**

An internal combustion engine 1 includes a fuel injection valve 6 that injects fuel to a combustion chamber E in which a swirl flow is generated. An injection direction of an injection hole 611H injecting fuel to a region E8 of the combustion chamber E through which a swirl flow flows upward while rotating, is set inclined downward with respect to a reference direction. Injection directions of an injection hole 611C, an injection hole 611D, and an injection hole 611G are set in the same manner. An injection direction of an injection hole 611E injecting fuel to a region E6 of the combustion chamber E through which a swirl flow flows downward while rotating, is set inclined downward with respect to a reference direction. Injection directions of an injection hole 611A, an injection hole 611B, and an injection hole 611F are set in the same manner.

## Description

### [TECHNICAL FIELD]

The present invention is related to an internal combustion engine.

### [BACKGROUND ART]

In some cases, in a compression ignition internal combustion engine (for example, diesel engine) including a piston provided with a cavity, a bottom wall surface of a cylinder head has a pent-roof shape, and a bottom wall surface of the cavity has a protruding shape corresponding to the pent-roof shape. Patent Document 1 discloses a pent-roof shaped piston. Patent Document 1 describes that rotating of fuel sprays with a swirl flow within the cavity generates an air-fuel mixture not partially uniform within the cavity in a conventional pent-roof shaped piston.

### [PRIOR ART DOCUMENT]

### [PATENT DOCUMENT]

[Patent Docuemnt 1] Japanese Unexamined Patent Application Publication No. 11-257089

### [SUMMARY OF THE INVENTION]

### [PROBLEMS TO BE SOLVED BY THE INVENTION]

For example, in the following case, the internal combustion engine can be configured such that the bottom wall surface of the cylinder head has a pent-roof shape and the bottom wall surface of the cavity has a protruding shape corresponding to the pent-roof shape. That is, in a case of commonizing the cylinder head or improving the commonality thereof between a compression ignition internal combustion engine and a spark ignition internal combustion engine (for example, gasoline engine), such a configuration can be achieved.

In a case of generating the swirl flow in a combustion chamber of each internal combustion engine having such a configuration, for example, the bottom wall surface of the cavity can be provided as follows. That is, the bottom wall surface of the cavity can be provided such that a cross-sectional area, of the combustion chamber, including a rotation center axis of the swirl flow in the cavity is substantially constant in the direction of the swirl flow in a state where the piston is positionally fixed.

However, in this case of generating the swirl flow in the above combustion chamber, the bottom wall surface of the cavity has such a shape as to change its height in the flow direction of the swirl flow. As a result, the swirl flow flows upward or downward in the cavity while rotating. This influences fuel sprays injected to the combustion chamber.

Therefore, in the above mentioned case of generating the swirl flow in the combustion chamber of each internal combustion engine, and in a case where the swirl flow flows upward or downward in the cavity while rotating, it is desired that the fuel injection is performed in consideration of a flowing manner of the swirl flow.

The present invention has been made in view of the above circumstances and has an object to provide an internal combustion engine that injects fuel in consideration of a flowing manner of a swirl flow to suitably inject the fuel to a combustion chamber.

### [MEANS FOR SOLVING THE PROBLEMS]

The present invention is an internal combustion engine including a fuel injection valve that injects fuel to a combustion chamber in which a swirl flow is generated, wherein an injection direction, of any injection hole of injection holes provided in the fuel injection valve injecting fuel to a region of the combustion chamber through which a swirl flow flows upward while rotating, is set inclined downward with respect to a reference direction, an injection direction, of any injection hole of injection holes provided in the fuel injection valve injecting fuel to a region of the combustion chamber through which a swirl flow flows downward while rotating, is set inclined upward with respect to a reference direction.

The present invention can be configured to include a piston including a cavity exposed to the combustion chamber; and a cylinder head including a central portion serving as a portion defining the combustion chamber, wherein the cavity includes a cavity bottom wall surface having such a shape as to change its height in a direction of a swirl flow, and the central portion includes a head bottom wall surface having such a shape as to change its height in the direction of a swirl flow, each injection direction of the injection holes is set such that a distance between a reaching point of a fuel spray injected from any of the injection holes and at least any of the cavity bottom wall surface and the head bottom wall surface, in a direction of a central axis of the combustion chamber, is constant between the injection holes.

### [EFFECTS OF THE INVENTION]

According to the present invention, it is possible to suitably inject fuel to a combustion chamber by performing fuel injection in consideration of a flowing manner of a swirl flow.

### [BRIEF DESCRIPTION OF THE DRAWINGS]

FIG. 1 is a schematic configuration view of an internal combustion engine;
FIG. 2 is a view of the internal combustion engine when viewed in a cross-section taken along line A-A of FIG. 1;
FIG. 3 is a view illustrating an injection hole portion;
FIG. 4 is an external view of a piston;
FIG. 5 is a top view of the piston;
FIG. 6 is a view of the piston when viewed in a cross-section taken along line B-B of FIG. 5;
FIG. 7 is a view of the piston when viewed in a cross-section taken along line C-C of FIG. 5;
FIG. 8 is a view illustrating a change in each parameter;
FIG. 9 is an explanatory view of a bottom wall surface corresponding to FIG. 8;
FIG. 10 is an explanatory view of a combustion chamber corresponding to FIG. 8 and FIG. 9;
FIG. 11 is an explanatory view of arrangement of plural injection holes;
FIG. 12 is an explanatory view of injection angles;
FIG. 13 is a first explanatory view of reaching points; and
FIG. 14 is a second explanatory view of reaching points.

### [MODES FOR CARRYING OUT THE INVENTION]

An embodiment according to the present invention will be described with reference to the drawings.

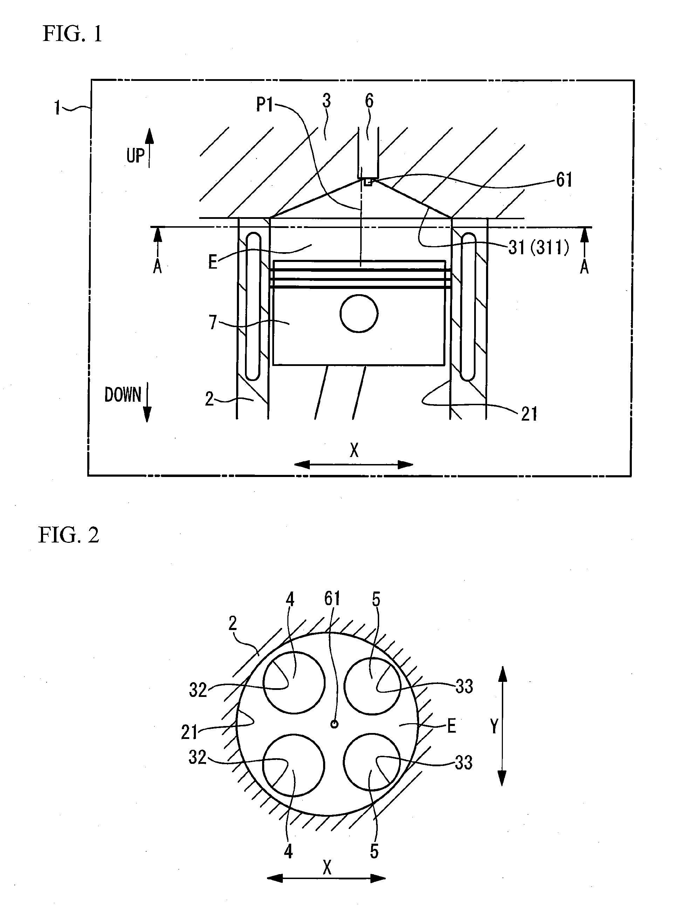

FIG. 1 is a schematic configuration view of an internal combustion engine 1. FIG. 2 is a view of the internal combustion engine 1 when viewed in a cross-section taken along line A-A of FIG. 1. FIG. 1 illustrates a cylinder block 2 and a cylinder head 3 of the internal combustion engine 1 in a cross-section including a central axis P1 that is a central axis of a combustion chamber E. As illustrated in FIG. 1, it is assumed that an upward and downward direction in the internal combustion engine 1 is the central axis P1 and that the cylinder head 3 is located above the cylinder block 2. The direction X illustrated in FIG. 1 and FIG. 2 indicates the intake and exhaust direction of the internal combustion engine 1. The Y direction illustrated in FIG. 2 indicates the front and rear directions of the internal combustion engine 1. FIG. 1 and FIG. 2 illustrate each simplified component.

The internal combustion engine 1 is a compression ignition internal combustion engine, and is an internal combustion engine in which a swirl flow is generated in the combustion chamber E. The internal combustion engine 1 includes the cylinder block 2, the cylinder head 3, intake valves 4, exhaust valves 5, a fuel injection valve 6, and a piston 7. A cylinder 21 is formed in the cylinder block 2. The cylinder 21 has the central axis P1. In other words, the cylinder 21 defines the central axis P1. The piston 7 is housed in the cylinder 21. The cylinder head 3 is secured to an upper portion of the cylinder block 2.

The cylinder head 3 defines the combustion chamber E in conjunction with the cylinder block 2 and the piston 7. In a bottom wall portion of the cylinder head 3, a central portion 31 that is a portion defines the combustion chamber E has a pent-roof shape. Specifically, a bottom wall surface 311 provided in the central portion 31 has a pent-roof shape. The bottom wall surface 311 corresponds to a head bottom wall surface.

Specifically, the pent-roof shape is configured to have a top portion located off the central axis P1 toward the exhaust side in the direction X. The central portion 31 (specifically, the bottom wall surface 311) may have a pent-roof shape with the top portion that is located at the central axis P1 in the direction X or off the central axis P1 toward the intake side.

Intake ports 32 and exhaust ports 33 are formed in the cylinder head 3. Further, the intake valves 4 and the exhaust valves 5 are provided. Both the intake ports 32 and the exhaust ports 33 open to the combustion chamber E. The intake ports 32 introduce intake air into the combustion chamber E, and the exhaust ports 33 exhaust gas from the combustion chamber E. The intake valve 4 opens and closes the intake port 32, and the exhaust valve 5 opens and closes the exhaust port 33.

Specifically, plural pairs (two pairs in this case) of the intake port 32 and the intake valve 4 are provided corresponding to the combustion chamber E. Also, plural pairs (two pairs in this case) of the exhaust port 33 and the exhaust valve 5 are provided corresponding to the combustion chamber E. Each intake port 32 may be an independent port independent of each other, or may be a part of a Siamese port which branches off partway and opens to the combustion chamber E. The specific shape of the intake ports 32 may be different from each other. These things are the same as each exhaust port 33.

The fuel injection valve 6 is further provided in the cylinder head 3. The fuel injection valve 6 injects fuel into the combustion chamber E. The fuel injection valve 6 includes an injection hole portion 61. The injection hole portion 61 is exposed from the central portion of the upper portion of the combustion chamber E. The position of the fuel injection valve 6 in the direction X is set to match the top portion of the pent-roof shape of the central portion 31. Therefore, specifically, the fuel injection valve 6 is provided at a position off the central axis P1 toward the exhaust side in the direction X.

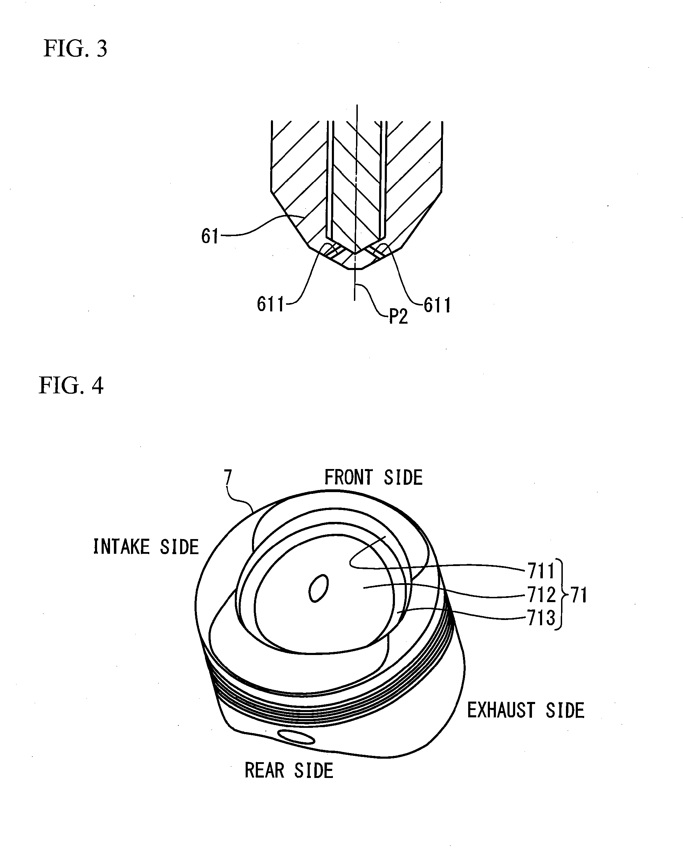

FIG. 3 is a view illustrating the injection hole portion 61. Injection holes 611 are provided in the injection hole portion 61. The injection hole portion 61 is a portion, of the fuel injection valve 6, in which the injection holes 611 are provided, and has a central axis P2. The injection hole portion 61 is specifically an end portion of a nozzle body provided in the fuel injection valve 6. Plural injection holes 611 (eight in this case) are provided in the injection hole portion 61 in the circumferential direction. The number of the plural injection holes 611 can be even.

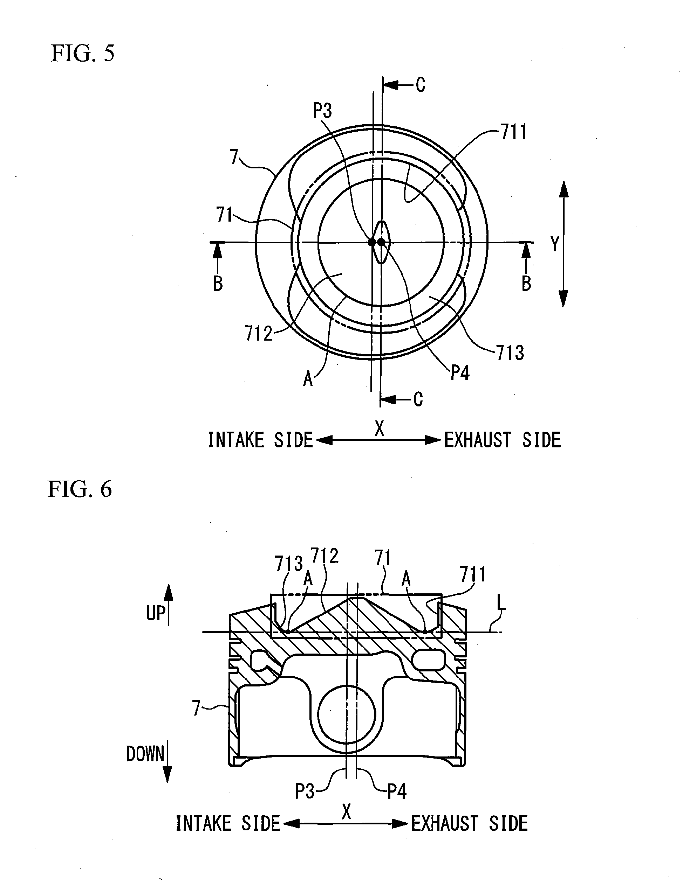

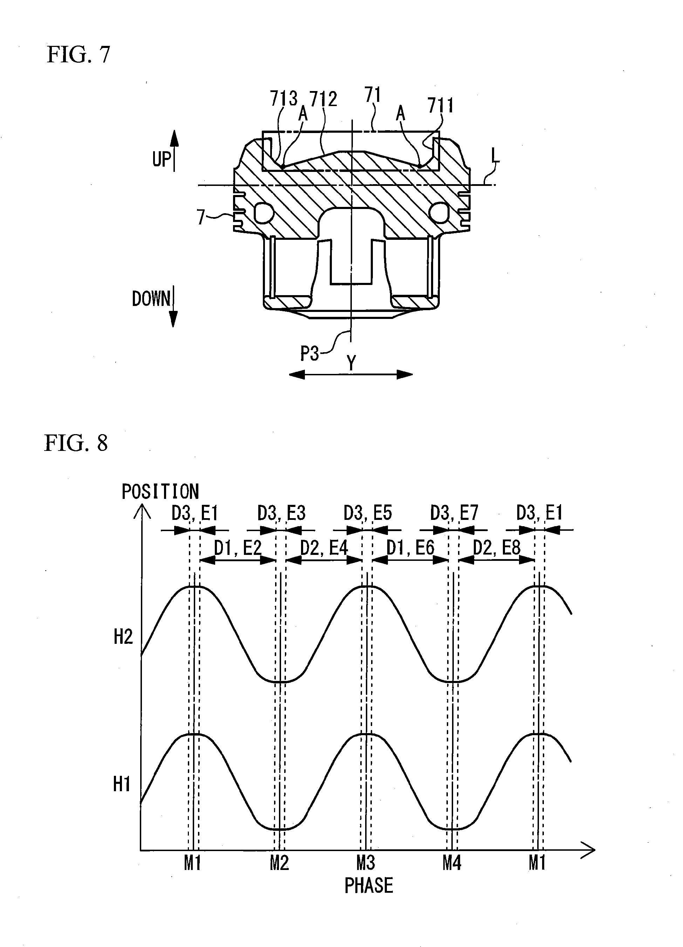

FIG. 4 is an external view of the piston 7. FIG. 5 is a top view of the piston 7. FIG. 6 is a view of the piston 7 when viewed in a cross-section taken along line B-B of FIG. 5. FIG. 7 is a view of the piston 7 when viewed in a cross-section taken along line C-C of FIG. 5. FIG. 4 to FIG. 7 illustrate the direction of the piston 7 in the internal combustion engine 1 by indicating the intake side, the exhaust side, the front side, and the rear side, and in addition to the upward and downward direction, the X direction, and the direction Y in the internal combustion engine 1. In the following description, the piston 7 will be described in consideration of the state thereof in the internal combustion engine 1. Therefore, in the following description, the piston 7 will be described according to these indications as needed.

The piston 7 has a cavity 71. The cavity 71 is provided at the top portion of the piston 7. Therefore, the cavity 71 is exposed to the combustion chamber E in the internal combustion engine 1. The position of the cavity 71 in the direction X is set corresponding to the fuel injection valve 6. Therefore, the cavity 71 is provided at a position off the central axis P3 of a central axis of the piston 7 toward the exhaust side in the direction X. In the internal combustion engine 1, the piston 7 is provided such that the central axis P3 and the central axis P1 are located in the same position. Sameness includes difference between them within the manufacturing error range. Sameness can also include difference between them within as long as the present invention can have effects. The same applies hereinafter.

The cavity 71 includes a circumferential edge portion 711, a bottom wall surface 712, and an intermediate portion 713. The circumferential edge portion 711 has a cylindrical shape. The circumferential edge portion 711 is not always limited to have a cylindrical shape, for example, may have an elliptic cylindrical shape. The circumferential edge portion 711 has a central axis P4 that is the central axis of the cavity 71. In other words, the circumferential edge portion 711 defines the central axis P4.

The central axis P4 extends along the central axis P3. The central axis P4 also corresponds to the rotation center axis of a swirl flow in the cavity 71. The central axis P4 is set at a position off the central axis P3 toward the exhaust side in the direction X. Specifically, the central axis P4 is set at the same position as the central axis P2 in the internal combustion engine 1.

The bottom wall surface 712 has a protruding shape. This shape is not axial symmetric with respect to the central axis P3, but axial symmetric with respect to the central axis P4. The bottom wall surface 712 shares the central axis P4 with the circumferential edge portion 711. The bottom wall surface 712 may not always share the central axis P4 with the circumferential edge portion 711. The bottom wall surface 712 corresponds to a cavity bottom wall surface. The intermediate portion 713 is provided between the circumferential edge portion 711 and the bottom wall surface 712, and connects the circumferential edge portion 711 with the bottom wall surface 712. The intermediate portion 713 includes an adjacent portion A adjacent to the bottom wall surface 712.

In the bottom wall surface 712, specifically, in each cross-section of the piston 7 including the central axis P4 (for example, the cross-section illustrated in FIG. 6 or FIG. 7), one side and the other side sandwiching the central axis P4 are provided to each protrude from the height of the adjacent portion A. In each cross-section of the piston 7 including a central axis P4, the adjacent portions A sandwiching the central axis P4 specifically have the same height.

In each cross-section, the adjacent portions A sandwiching the central axis P4 are further specifically portions lowest in the surface of the cavity 71. Each of the adjacent portions A sandwiching the central axis P4 is higher in the cross-section illustrated in FIG. 7 than in the cross-section illustrated in FIG. 6 among the cross-sections. In each cross-section of the piston 7 including the central axis P4, the adjacent portions A sandwiching the central axis P4 may not always have the same height.

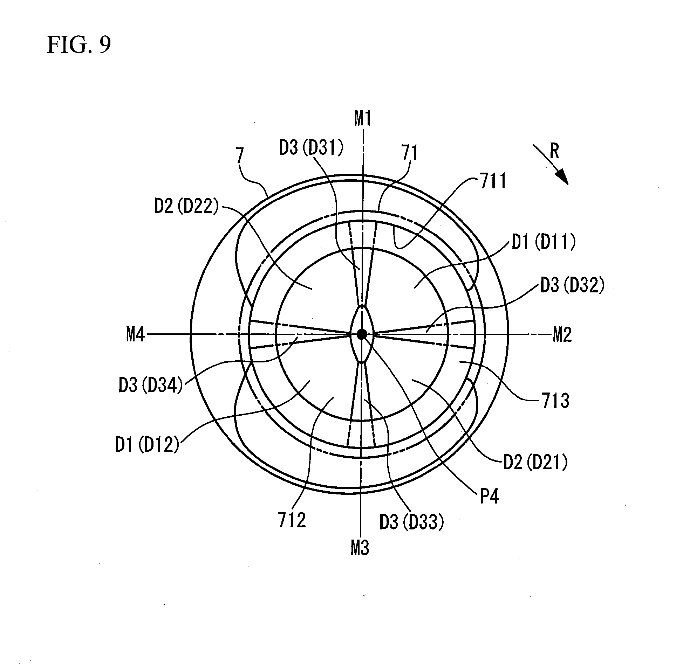

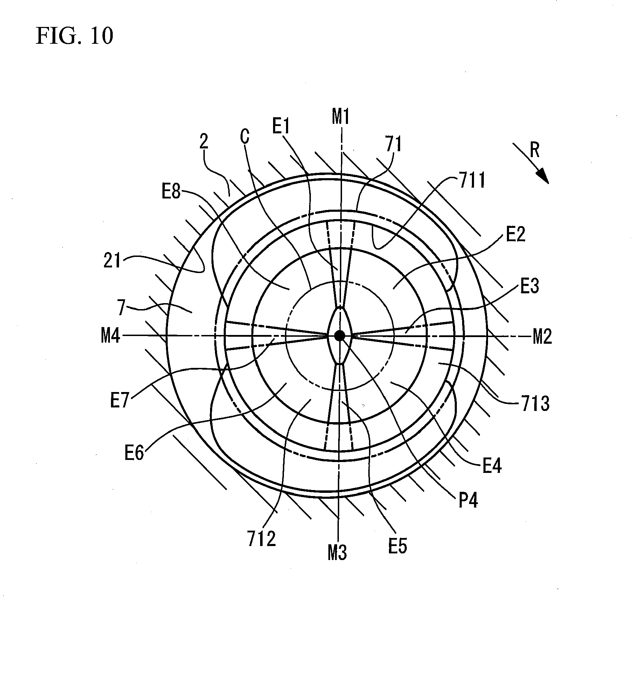

Next, the bottom wall surface 712 will be further described with reference to FIG. 8, FIG. 9, and FIG. 10. FIG. 8 is a view illustrating a change in each parameter. FIG. 9 is an explanatory view of the bottom wall surface 712 corresponding to FIG. 8. FIG. 10 is an explanatory view of the combustion chamber E corresponding to FIG. 8 and FIG. 9. The vertical axis illustrated in FIG. 8 indicates a position in the direction of the central axis P1. The horizontal axis illustrated in FIG. 8 indicates a phase (angular position) of which the rotational center is the central axis P4. The direction R illustrated in FIG. 9 and FIG. 10 indicates the rotational direction of the swirl flow.

FIG. 8 illustrates a height H1 and a height H2 as each parameter. The height H1 is the height of the bottom wall surface 712, specifically, the height with respect to a virtual plane L (see FIG. 6 and FIG. 7) perpendicular to the central axis P4 and below the bottom wall surface 712. The height H2 is the height of the bottom wall surface 311, specifically, the height with respect to a virtual plane (herein, virtual plane L) perpendicular to the central axis P1 and below the bottom wall surface 311. FIG. 8 illustrates decrease portions D 1, increase portions D2, and intermediate portions D3 to be described later, and regions E1 to E8 to be described later.

A change in each parameter illustrated in FIG. 8 is in the flow direction of the swirl flow. A phase M1 indicates a phase center in the front side as the rotational center of the phase is the central axis P4. A phase M2, a phase M3, and a phase M4 respectively indicate phase centers in the exhaust, rear, and intake sides of the phase. The change, in the flow direction of the swirl flow, means specifically as follows: that is, a locus of the swirl flow corresponds to the shape of the circumferential edge portion 711 in the cavity 71 herein.

Thus, the change, in the flow direction of the swirl flow, means a change, in the direction of the outline of the circumferential edge portion 711. This change specifically means a change corresponding to the phase of which the rotational center is the central axis P4 and observed along a virtual locus C (See FIG. 10) of the swirl flow in accordance with the shape of the circumferential edge portion 711. The virtual locus C specifically shares the central axis P4 with the circumferential edge portion 711, and has a ring shape analogous to the outline of the circumferential edge portion 711 viewed along the central axis P4.

The bottom wall surface 712 has such a shape as to change its height H1 in the flow direction of the swirl flow. This bottom wall surface 712 is specifically a bottom wall surface including the decrease portions D1, the increase portions D2, and the intermediate portions D3 to be described below.

The decrease portions D1 are located within the range from the phase M1 to the phase M2 in the direction R and within the range from the phase M3 to the phase M4 in the direction R. A decrease portion D11 means the decrease portion D1 located within the former range, and a decrease portion D 12 means the decrease portion D1 located within the latter range. The reduction portion D1 is a portion to decrease its height H1 in the direction R.

The increase portion D2 are located within the range from the phase M2 to the phase M3 in the direction R and within the range from the phase M4 to the phase M1 in the direction R. An increase portion D21 means the increase portion D2 located within the former range, and an increase portion D22 means the increase portion D2 located within the latter range. The increase portion D2 is a portion to increase its height H1 in the direction R.

The intermediate portions D3 are located to respectively correspond to the phase M1, the phase M2, the phase M3, and the phase M4. An intermediate portion D31 means the intermediate portion D3 located to correspond to the phase M1. An intermediate portion D32, an intermediate portion D33, and an intermediate portion D34 mean the intermediate portions D3 located to correspond to the phase M2, the phase M3, and the phase M4, respectively. The intermediate portion D3 is adjacent to the decrease portion D1 and the increase portion D2 in the direction R, and connect the adjacent decrease portion D1 and increase portion D2. The intermediate portion D3 is a portion where its height H1 is constant in the direction of the swirl flow.

The intermediate portion D3 may be a change portion to change a change degree of its height H1 between the adjacent decrease portion D1 and increase portion D2. The bottom wall surface 712 may be provided with, for example, an edge portion formed by the decrease portion D 1 and the increase portion D2 adjacent to each other, instead of the intermediate portion D3.

The top portion of the bottom wall surface 712 has a flat shape. Thus, the bottom wall surface 712 specifically has the portion other than the top portion having such a shape as to change the height H1 in the flow direction of the swirl flow. Like the bottom wall surface 712, the surface of the intermediate portion 713 also includes the decrease portions D1, the increase portions D2, and the intermediate portions D3. The bottom wall surface 712 can be a portion further including the surface of the intermediate portion 713. That is, the bottom wall surface 712 and the surface of the intermediate portion 713 can be the cavity bottom wall surface.

The bottom wall surface 311 also has such a shape as to change the height H2 in the flow direction of the swirl flow. In contrast, the height H1 changes, in the flow direction of the swirl flow in the same manner as the height H2. This is because the bottom wall surface 712 is provided such that a cross-sectional area, of the combustion chamber E, including the central axis P4 is substantially constant in the direction of the swirl flow in a state where the piston 7 is positionally fixed. In other words, this is because the bottom wall surface 712 is provided so as to suppress a change in the above mentioned cross-sectional area in the flow direction of the swirl flow.

The combustion chamber E has the plural region E1 to the region E8. The region E1 to the region E8 present above the cavity 71. The region E1 is a region adjacent to the intermediate portion D31. A region E2, a region E3, a region E4, a region E5, a region E6, a region E7, and the region E8 are adjacent to the decrease portion D11, the intermediate portion D32, the increase portion D21, the intermediate portion D33, the decrease portion D12, the intermediate portion D34, and the increase portion D22, respectively.

The region E4 and the region E8 are regions through which the swirl flow flows upward while rotating due to the flow of the swirl flow influenced by the increase portions D2. The region E4 and the region E8 are regions that tend to transport the fuel sprays to the bottom wall surface 311 side of the bottom wall surface 311 and the bottom wall surface 712 due to the rotating upward flow of the swirl flow.

The region E2 and the region E6 are regions through the swirl flow flows downward while rotating due to the flow of the swirl flow influenced by the decrease portions D1. The regions E2 and the region E6 are regions that tend to transport the fuel sprays to the bottom wall surface 712 side of the bottom wall surface 311 and the bottom wall surface 712 due to the rotating downward flow of the swirl flow.

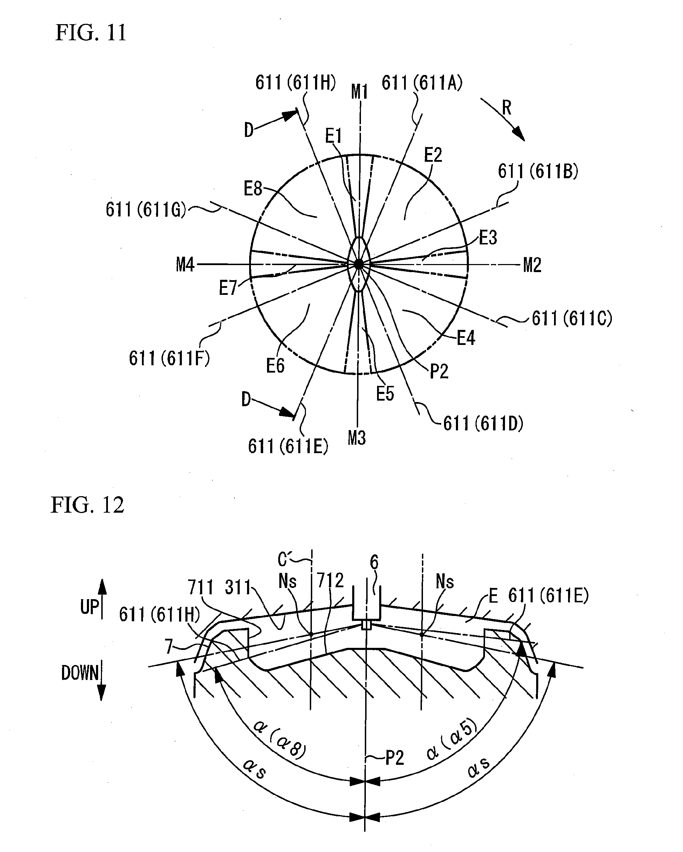

FIG. 11 is an explanatory view of arrangements of the plural injection holes 611. FIG. 12 is an explanatory view of injection angles α. In FIG. 11 and FIG. 12, the injection holes 611 are represented by the central axes thereof. In FIG. 12, the injection angles α will be described with reference to a main portion of the internal combustion engine 1 illustrated in a cross-section similar to a cross-section taken along line D-D of FIG. 11. FIG. 12 also illustrates reference injection angles αs and reference reaching points Ns.

The plural injection holes 611 are provided corresponding to the region E2, the region E4, the region E6, and the region E8. An injection hole 611A and an injection hole 611B indicate the injection hole 611 for injecting the fuel to the region E2. An injection hole 611C and an injection hole 611D, an injection hole 611E and an injection hole 611F, and an injection hole 611G and an injection hole 611H indicate the injection holes 611 for injecting the fuel to the region E4, the region E6, and the region E8, respectively.

The injection hole 611A indicates the injection hole 611 located in front of the injection hole 611B in the direction R. The injection hole 611C, the injection hole 611E, and the injection hole 611G indicate the injection holes 611 located in front of the injection hole 611D, the injection hole 611F, and the injection hole 611H in the direction R, respectively.

The injection angle α is any injection angle of the plural injection holes 611, specifically, an acute angle between any injection direction of the plural injection holes 611 and the central axis P2 or a line parallel with the central axis P2. An injection angle α5 and an injection angle α8 indicate the injection angles α corresponding to the injection hole 611E and the injection hole 611H, respectively. Further, the injection hole 611A, the injection hole 611B, the injection hole 611C, the injection hole 611D, the injection hole 611F, and the injection hole 611G respectively have an injection angle α1, an injection angle α2, an injection angle α3, an injection angle α4, an injection angle α6, and an injection angle α7 not illustrated and serving as the injection angles α.

A reference injection angle αs is an injection angle in a case where the swirl flow is not generated in the combustion chamber E, and is specifically set as follows. That is, in a state where the piston 7 is fixed at a reference position, the reference injection angle αs is set such that any central axis of the plural injection holes 611 is positioned in the center between the bottom wall surface 311 and the bottom wall surface 712. As for setting the reference injection angle αs, the reference injection angle αs can be more specifically set as follows.

That is, the reference injection angle αs can be set such that, in the direction of the central axis P1 (in other words, in a direction along an upward and downward direction of the internal combustion engine 1), a point included in the above mentioned central axis is positioned in the center between the bottom wall surface 311 and the bottom wall surface 712. Alternatively, the reference injection angle αs can be set such that a point included in the above mentioned central axis is positioned in the center between the bottom wall surface 311 and the bottom wall surface 712 on the plane parallel with the central axis P1 including the above mentioned central axis in the direction perpendicular to the above mentioned central axis.

The latter setting of the above mentioned setting is more strict than the former setting, and the former setting is more simple than the latter setting. That is, the reference injection angle αs may be simply set by the former setting, or may be strictly set by the latter setting.

The above mentioned reference position can be a position of the piston 7 at the time of the fuel injection, in a state where a driving state (for example, rotational speed and load) of the internal combustion engine 1 falls within a predetermined driving region. The reference injection angles αs are individually set for the plural injection holes 611. A specific size of the reference injection angle αs may not be the same among the plural injection holes 611.

A reference reaching point Ns is a reaching point of the fuel spray in the state where the swirl flow is not generated in the combustion chamber E, and is specifically a reaching point to be described below. That is, the reference reaching point Ns is a reaching point of the fuel spray injected from the injection hole 611 in which the reference injection angle αs is set in the state where the piston 7 is fixed at the reference position. The reference reaching point Ns is specifically a point included in the central axis of the injection hole 611. Also, the reference reaching point Ns is a point in a case where the destination of the fuel spray is a virtually cylindrical-shaped body C' including a virtual locus C and extending along the central axis P1. The reference reaching point Ns may be a point in a case where the destination of the fuel spray is the circumferential edge portion 711.

Any injection direction (specifically, the injection direction in the upward and downward direction) of the plural injection holes 611 is an injection direction indicated by the injection angle α. Further, the reference injection direction corresponding to any injection hole of the plural injection holes 611 is an injection direction indicated by the reference injection angle αs.

The injection hole 611H injects the fuel to the region E8, as described above. The region E8 is a region of the combustion chamber E through the swirl flow flows upward while rotating, as described above. Meanwhile, the injection angle α8 is set smaller than the reference injection angle αs. Thus, the injection direction of the injection hole 611H is set inclined downward with respect to the reference direction. The injection directions of the injection hole 611C, the injection hole 611D, and the injection hole 611G have the same arrangements.

The injection hole 611E injects the fuel to the region E6, as described above. The region E6 is a region of the combustion chamber E through the swirl flow flows downward while rotating, as described above. Meanwhile, the injection angle α5 is set greater than the reference injection angle αs. Thus, the injection direction of the injection hole 611E is set inclined upward with respect to the reference direction. The injection directions of the injection hole 611 A, the injection hole 611B, and the injection hole 611F have the same arrangements.

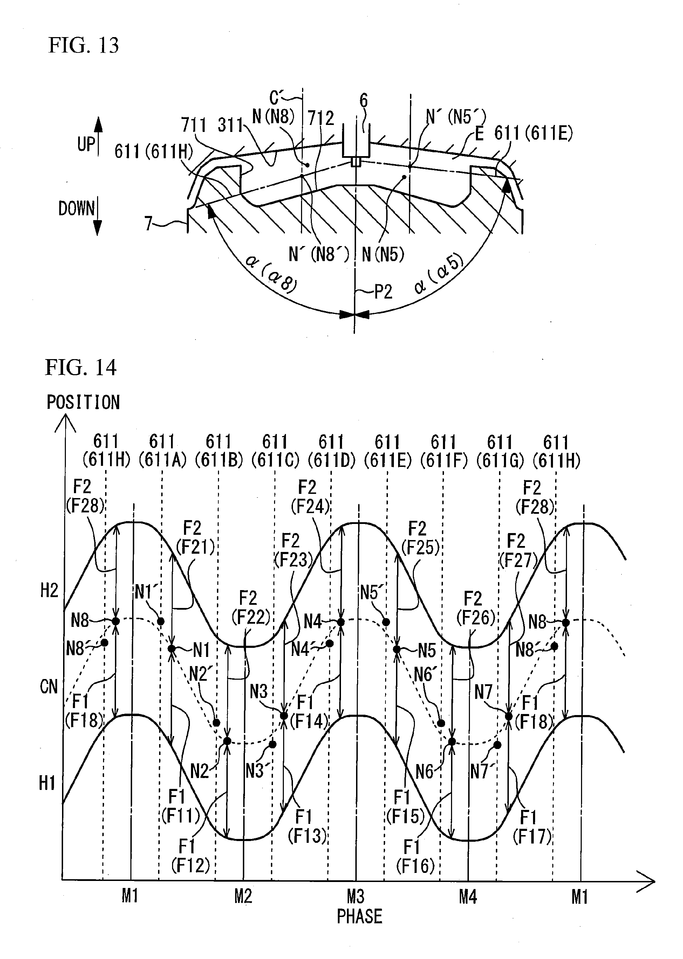

FIG. 13 is a first explanatory view of reaching points N. In FIG. 13, the reaching points N will be described with reference to the main portion of the internal combustion engine 1 illustrated in a cross-section similar to the cross-section taken along line D-D of FIG. 11. FIG. 13 also illustrates reaching points N'.

The reaching point N is a point which the fuel spray injected from any of the plural injection holes 611 reaches. The reaching point N is specifically a point which the fuel spray injected from any of the plural injection holes 611 reaches, in a state where the driving state of the internal combustion engine 1 is in a predetermined driving state (any driving state) of each driving state included in the above described predetermined driving region. A reaching point N5 and a reaching point N8 indicate the reaching points N corresponding to the injection hole 611E and the injection hole 611H, respectively. The reaching point N' is a point included in any central axis of the plural injection holes 611. A reaching point N5' and a reaching point N8' indicate the reaching points N' corresponding to the injection hole 611E and the injection hole 611H, respectively.

For every injection hole 611, the reaching point N is specifically a point which the fuel spray actually reaches while the fuel spray is influenced by the swirl flow, this fuel spray reaching the reaching point N' in the case where the swirl flow is not generated in the combustion chamber E. Thus, the reaching point N actually exists in a phase different to such a degree that the fuel spray is transported by the swirl flow in the direction R from the cross-section illustrated in FIG. 13. The reaching point N and the reaching point N' are points in a case where the destination of the fuel spray is the virtually cylindrical-shaped body C'. The reaching point N and the reaching point N' may be points in a case where the destination of the fuel spray is the circumferential edge portion 711.

FIG. 14 is a second explanatory view of the reaching points N. The vertical axis indicates a position in the direction along the central axis P1. The horizontal axis indicates a phase of which the rotational center is the central axis P4. FIG. 14 also illustrates the height H1, the height H2, a curved line CN, the reaching points N', distances F1, and distances F2. Like FIG. 8, FIG. 14 illustrates a change with a phase in the flow direction of the swirl flow.

A reaching point N1, a reaching point N2, a reaching point N3, a reaching point N4, a reaching point N6, and a reaching point N7 indicates the reaching points N corresponding to the injection hole 611A, the injection hole 611 B, the injection hole 611C, the injection hole 611D, the injection hole 611F, and the injection hole 611G, respectively.

A reaching point N1', a reaching point N2', a reaching point N3', a reaching point N4', a reaching point N6', and a reaching point N7' indicates the reaching points N' corresponding to the injection hole 611 A, the injection hole 611B, the injection hole 611C, the injection hole 611D, the injection hole 611F, and the injection hole 611G, respectively.

A distance F1 is a distance, in the direction along the central axis P1, between the reaching point N and the bottom wall surface 712. A distance F11, a distance F12, a distance F13, a distance F14, a distance F15, a distance F16, a distance F17, and a distance F18 indicate the distances F1 corresponding to the reaching point N1, the reaching point N2, the reaching point N3, the reaching point N4, the reaching point N5, the reaching point N6, the reaching point N7, and the reaching point N8, respectively.

A distance F2 is a distance, in the direction along the central axis P1, between the reaching point N and the bottom wall surface 311. A distance F21, a distance F22, a distance F23, a distance F24, a distance F25, a distance F26, a distance F27, and a distance F28 indicate the distances F2 corresponding to the reaching point N1, the reaching point N2, the reaching point N3, the reaching point N4, the reaching point N5, the reaching point N6, the reaching point N7, and the reaching point N8, respectively.

The curved line CN represented by a broken line is a virtual curved line indicating each position in the direction along the central axis P1 and along a partial shape of at least any of the bottom wall surface 712 and the bottom wall surface 311 (in this case, the bottom wall surface 712) in the flow direction of the swirl flow. This partial shape is specifically a ring shape.

The respective injection angles α (namely, respective injection directions of the plural injection holes 611) are set such that the respective reaching points N are arranged along the partial shape in the flow direction of the swirl flow and face the partial shape, extending in the flow direction of the swirl flow, of the bottom wall surface 712 in the direction of the central axis P1. Thus, each reaching point N can be included in the curved line CN. Each injection angle α set in such a way is specifically set such that the distances F1 are constant among the plural injection holes 611.

The respective injection angles α can be set such that the respective reaching points N are arranged along the partial shape in the flow direction of the swirl flow and face the partial shape, extending in the flow direction of the swirl flow, of at least any of the bottom wall surface 712 and the bottom wall surface 311 in the direction of the central axis P 1. Each injection angle α can be specifically set such that at least any of the distances F1 and the distances F2 are constant among the plural injection holes 611. The injection angle α may be set such that the distance F1 and the distance F2 are constant among the plural injection holes 611.

Next, the main effects of the internal combustion engine 1 will be described. In the internal combustion engine 1, the injection directions of the inj ection hole 611C, the injection hole 611D, the injection hole 611 G, and the injection hole 611H are each set inclined downward with respect to the reference direction. Further, in the internal combustion engine 1, the injection directions of the injection hole 611A, the injection hole 611B, the injection hole 611E, and the injection hole 611F are each set inclined upward with respect to the reference direction.

This can prevent or suppress respective fuel sprays injected from the plural injection holes 611 from tending to be transported to any side of the bottom wall surface 311 and the bottom wall surface 712. This can result in preventing or suppressing the atomization of the fuel from being disturbed by the collision of the fuel sprays with the bottom wall surface 311 or the bottom wall surface 712.

That is, each injection direction is set in consideration of a flowing manner of the swirl flow, whereby the internal combustion engine 1 can suitably inject the fuel in consideration of the flowing manner of the swirl flow. Further, this fuel injection is performed, thereby suitably injecting the fuel into the combustion chamber E against the possibility that the atomization of the fuel might be disturbed. The internal combustion engine 1 prevents or suppresses the atomization of the fuel from being disturbed, thereby specifically reducing the generation amount of unburned components or smoke.

The internal combustion engine 1 can be configured as follows. The respective injection angles α can be set such that the respective reaching points N are arranged along the partial shape in the flow direction of the swirl flow and face the partial shape, extending in the flow direction of the swirl flow, of at least any of the bottom wall surface 712 and the bottom wall surface 311 in the direction along the central axis P1. Specifically, the internal combustion engine 1 can be configured as follows. Each injection angle α can be set such that at least any of the distances F1 and the distances F2 are constant among the plural injection holes 611.

That is, specifically, for example, the internal combustion engine 1 is configured in such a way, thereby suitably preventing or suppressing the fuel sprays from colliding with the bottom wall surface 311 or the bottom wall surface 712. This can result in preventing or suppressing the atomization of the fuel from being disturbed. Also, the internal combustion engine 1 can be configured as follows. The injection angle α can be set such that the distance F1 is equal to the distance F2 among the plural injection holes 611.

Also, the internal combustion engine 1 can be configured as follows. The respective injection angles α can be set such that the respective reaching points N' are arranged along the partial shape in the flow direction of the swirl flow and face the partial shape, extending in the flow direction of the swirl flow, of at least any of the bottom wall surface 712 and the bottom wall surface 311 in the direction of the central axis P1. Specifically, the internal combustion engine 1 can be also configured as follows. Each injection angle α can be set such that a distance between the reaching point N' and at least any of the bottom wall surface 712 and the bottom wall surface 311 in the direction of the central axis P1 is constant among the plural injection holes 611.

Also, in this case, the internal combustion engine 1 injects the fuel in consideration of the shapes of the bottom wall surface 712 and the bottom wall surface 311, thereby preventing or suppressing the fuel sprays from colliding with the bottom wall surface 311 or the bottom wall surface 712. However, in this case, the flowing manner of the swirl flow is not considered, so the fuel spray might tend to collide with the bottom wall surface 311 or the bottom wall surface 712. Also, the internal combustion engine 1 can be configured as follows. Each injection angle α can be set such that a distance between the reaching point N' and the bottom wall surface 712 in the direction of the central axis P1 is equal to a distance between the reaching point N' and the bottom wall surface 311 among the plural injection holes 611.

While the exemplary embodiments of the present invention have been illustrated in detail, the present invention is not limited to the above-mentioned embodiments, and other embodiments, variations and variations may be made without departing from the scope of the present invention.

For example, the cavity bottom wall surface may not be always provided such that a cross-sectional area, of the combustion chamber, including a rotation center axis of the swirl flow in the cavity is substantially constant in the direction of the swirl flow in the state where the piston is positionally fixed.

### [DESCRIPTION OF LETTERS OR NUMERALS]

| | |
|---|---|
| internal combustion engine | 1 |
| cylinder head | 3 |
| central portion | 31 |
| bottom wall surface (head bottom wall surface) | 311 |
| fuel injection valve | 6 |
| fuel injection portion | 61 |
| piston | 7 |
| cavity | 71 |
| bottom wall surface (cavity bottom wall surface) | 712 |

## Claims

1. An internal combustion engine comprising a fuel injection valve that injects fuel to a combustion chamber in which a swirl flow is generated,
wherein
an injection direction, of any injection hole of injection holes provided in the fuel injection valve injecting fuel to a region of the combustion chamber through which a swirl flow flows upward while rotating, is set inclined downward with respect to a reference direction,
an injection direction, of any injection hole of injection holes provided in the fuel injection valve injecting fuel to a region of the combustion chamber through which a swirl flow flows downward while rotating, is set inclined upward with respect to a reference direction.

2. The internal combustion engine of claim 1, comprising:
a piston including a cavity exposed to the combustion chamber; and
a cylinder head including a central portion serving as a portion defining the combustion chamber,
wherein
the cavity includes a cavity bottom wall surface having such a shape as to change its height in a direction of a swirl flow, and the central portion includes a head bottom wall surface having such a shape as to change its height in the direction of a swirl flow,
each injection direction of the injection holes is set such that a distance between a reaching point of a fuel spray injected from any of the injection holes and at least any of the cavity bottom wall surface and the head bottom wall surface, in a direction of a central axis of the combustion chamber, is constant between the injection holes.
